Europäisches Patentamt

(19) European Patent Office

Office européen des brevets

(11) Numéro de publication : **0 458 683 A1**

# (12) DEMANDE DE BREVET EUROPEEN

(21) Numéro de dépôt : **91401277.8**

(22) Date de dépôt : **17.05.91**

(51) Int. Cl.⁵ : **A01K 85/10, A01K 85/00**

(30) Priorité : **17.05.90 FR 9006178**

(43) Date de publication de la demande :
**27.11.91 Bulletin 91/48**

(84) Etats contractants désignés :
**ES GB IT**

(71) Demandeur : **Société anonyme dite : RAGOT**
**75 boulevard de Penthièvre**
**F-22600 Loudeac (FR)**

(72) Inventeur : **Benard, Claude**
**Les Salles**
**F-29111 Scaer (FR)**

(74) Mandataire : **Hammond, William**
**Cabinet CORRE & HAMMOND 17 rue Pasteur**
**F-92300 Levallois (FR)**

(54) **Aile tournante souple à pas variable pour leurre artificiel de pêche.**

(57)    1° leurre artificiel (1) pour la pêche aussi bien en eau douce qu'en eau de mer, caractérisé par le fait qu'il comprend une première partie constituée par un volume (2) de révolution percé d'un canal (3) selon un axe de révolution dudit volume et une partie (4) héliciforme, l'ensemble étant réalisé en un matériau souple.

Fig. 1.

EP 0 458 683 A1

Jouve, 18, rue Saint-Denis, 75001 PARIS

La présente invention est relative à un leurre artificiel pour la pêche aussi bien en eau douce qu'en eau de mer. Ce leurre peut être utilisé seul ou en combinaison avec d'autres leurres bien connus de l'homme du métier.

Ainsi, on connaît déjà un leurre artificiel comprenant une cuiller rotative montée à l'extrémité d'une tige métallique à laquelle est attaché un fil de ligne de pêche, un hameçon étant monté à l'autre extrémité de cette tige. Le document US-A-4.163.328 décrit notamment un tel type de leurre : la cuiller est métallique et présente un bombement; au repos cette cuiller pend en position sensiblement verticale.

Si un tel leurre est effectivement performant, il présente néanmoins un grave inconvénient, dont le pêcheur lui-même n'est pas forcément averti. En effet, un poisson, du fait de la rigidité de la cuiller, peut être dissuadé de mordre malgré l'attrait d'un tel leurre. Les raisons de cette dissuasion sont multiples;Les principales en sont:

- suivant l'angle sous lequel un poisson attaque un leurre, il peut refermer sa gueule sur la palette du leurre, dans le cas d'une cuiller, sans se faire prendre et rejeter le tout en un instant
- la palette d'une cuiller peut adhérer à son axe ou démarrer sa rotation trop doucement, ce qui présente des inconvénients nuisant au rôle attractif du leurre.

Aussi un des buts de la présente invention est-il de fournir un leurre artificiel pour la pêche aussi bien en eau douce qu'en eau de mer, qui permet de pallier les inconvénients énoncés ci-dessus.

Un autre but de l'invention est de fournir un tel leurre qui est de fabrication simple et peu coûteuse.

Ces buts, ainsi que d'autres qui apparaîtront par la suite, sont atteints par un leurre artificiel pour la pêche aussi bien en eau douce qu'en eau de mer, caractérisé par le fait qu'il comprend une première partie constituée par un volume de révolution percé d'un canal selon un axe de révolution de ce volume et une seconde partie héliciforme réalisée en un matériau souple et raccordée à la première selon une ligne sensiblement parallèle à l'axe de révolution.

Avantageusement, ce leurre est réalisé en une matière plastique souple de préférence notamment choisie parmi les matériaux suivants plastisol, pvc souple, caoutchouc naturel ou de synthèse, silicone ou tout autre matériau souple du genre.

Avantageusement la seconde partie héliciforme est en forme d'aile.

Comme il a été dit, ce leurre peut être utilisé avec d'autres leurres tels que mouche, ou poisson, la concavité de la seconde partie héliciforme étant tournée dans la direction opposée à celle où est situé un hameçon.

Pour certains type de pêche, il peut être avantageux de monter sur une même ligne deux tels leurres, éventuellement en combinaison avec d'autres leurres.

La descritpion qui va suivre et qui ne présente aucun caractère limitatif, doit être lue en regard des figures annexées parmi lesquelles :

- la figure 1 représente un leurre artificiel selon la présente invention;
- la figure 2 représente ce leurre monté sur une ligne de pêche
- les figures 3 et 4 représentent ce leurre monté en combinaison avec d'autres leurres sur une même ligne de pêche.

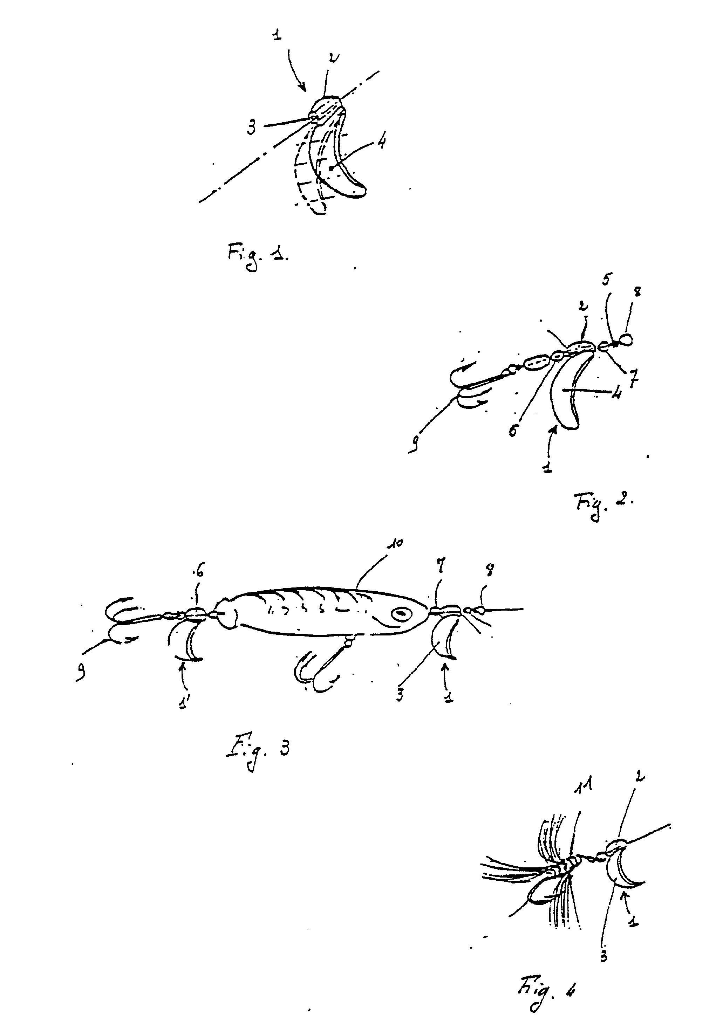

Ainsi qu'on peut le voir sur la figure 1, un leurre artificiel désigné dans son ensemble par la référence 1, selon la présente invention, comprend deux parties: une première partie 2 de forme sensiblement ovoïde selon cet exemple de réalisation et percé d'un canal 3 selon un axe de révolution, et une seconde partie 4 héliciforme en un matériau souple.

Cette seconde partie 4 héliciforme, pas à gauche ou à droite, est une aile qui est raccordée à la première partie 2 selon une ligne sensiblement parallèle à l'axe de révolution.

Le leurre 1 est en fait réalisé en une seule pièce obtenue, par exemple, par moulage. Le matériau souple dans lequel est réalisé ce leurre est choisi parmi les matières plastiques suivantes : plastisol, pvc souple, caoutchouc naturel ou de synthèse, silicone ou tout autre matériau souple du genre.

Du fait de la souplesse du matériau la constituant, cette aile 4 se déformera comme représenté en pointillés sur la figure 1, sous l'action de la pression de l'eau réduisant ainsi sa vitesse de rotation par rapport à une cuiller métallique. En effet, si pour des raisons inhérentes à l'action de pêche on est obligé d'accélérer le leurre, celui-ci tournera trés vite ce qui effraiera le poisson : or avec un leurre, selon la présente invention,la vitesse de rotation de l'aile sera certes augmentée mais dans de moindres proportions comme expliqué ci-dessus. Par la forme de son aile lorsque le leurre est tracté, l'eau vient prendre appui sur l'aile qui est tournée vers l'extérieur, c'est-à-dire dans la direction opposée au fil sur lequel ce leurre serait monté, comme représenté sur les figures, engendrant ainsi une mise en mouvement immédiate à la moindre tirée.

Ainsi qu'il a été dit et comme représenté aux figures 2 à 4, le leurre artificiel selon la présente invention peut être monté seul ou avec d'autres leurres sur une même ligne de pêche.

Dans la description des figures 2 à 4, les éléments homologues ou analogues auront la même référence, dans un but de simplification.

La figure 2 est relative à un mode de réalisation dans lequel un leurre artificiel 1 selon l'invention est monté seul sur une ligne de pêche. Dans ce cas, il est utilisé comme une cuiller métallique. Il est monté sur une tige métallique 5 entre deux perles 6 et 7, cette tige comprenant à une extrémité un anneau 8 pour la fixation d'une ligne de pêche et à son autre extrémité un hameçon 9 par exemple triple. La concavité de l'aile est dirigée vers l'anneau 8, c'et-à-dire dans la direction opposée à celle où est située l'hameçon 9.

La figure 3 représente un montage dans lequel un leurre artificiel 1 selon la présente invention est monté en combinaison avec un poisson à hélices 10. Dans ce cas, ce dernier est encadré par deux ailes 1 et 1' qui sont de pas inverse l'une de l'autre.

Comme le leurre artificiel selon la présente invention n'est pas limité en taille, il peut être miniaturisé et placé sur une ligne à mouche comme représenté à la figure 4. Dans cet exemple de réalisation le leurre artificiel 1 est situé avant une mouche 11 qui est ainsi disposée entre l'hameçon 9 et ce leurre 1.

**Revendications**

1. Leurre artificiel en un matériau souple, pour la pêche destiné à être monté au-dessus d'un hameçon comprenant une première partie constituée par un volume de révolution percé d'un canal selon un axe de révolution dudit volume et une seconde partie héliciforme, caractérisé par le fait que ladite seconde partie en forme d'aile est raccordée à la première partie selon une ligne sensiblement parallèle audit axe de révolution, la concavité de ladite aile étant dirigée dans la direction opposée à celle où est situé ledit hameçon.

Fig. 1.

Fig. 2.

Fig. 3

Fig. 4

4

Office européen
des brevets

# RAPPORT DE RECHERCHE EUROPEENNE

Numero de la demande

EP 91 40 1277

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | FR-A-1 248 602 (ROUILLE)<br>* le document en entier *<br>--- | 1 | A01K85/10<br>A01K85/00 |
| Y | US-A-3 775 892 (BENNETTS)<br>* figures *<br>--- | 1 | |
| | FR-E-66 692 (FERRARI)<br>--- | | |
| | FR-A-936 611 (RAGOT)<br>--- | | |
| | FR-A-827 447 (ALCAY)<br>--- | | |
| | US-A-1 795 205 (FENDERSON)<br>----- | | |

**DOMAINES TECHNIQUES RECHERCHES (Int. Cl.5 )**

A01K

Le présent rapport a été établi pour toutes les revendications

| Lieu de la recherche | Date d'achèvement de la recherche | Examinateur |
|---|---|---|
| LA HAYE | 01 AOUT 1991 | VERDOODT S.J.M. |